# EUROPEAN PATENT APPLICATION

(11) **EP 4 650 132 A1**
(43) Date of publication of application: **19.11.2025**
(21) Application number: 24175700.4
(22) Date of filing: 14.05.2024
(51) Int. Cl.: B29B 17/00, B29K 105/08, B29L 31/10, B29L 31/00

(54) **SHAPED ARTICLES DERIVED FROM RECYCLED POLYMERIC MEMBRANE WASTE**

(71) Applicant: Sika Technology AG, 6340 Baar (CH)
(72) Inventor: LEEBER, Blaise W., 01803 Burlington (US); HOWARD, Andrew, 02351 Abington (US); STAEHLI, Andre, 6072 Sachseln (CH); VILLIGER, Matthias, 6055 Alpnach Dorf (CH)
(74) Representative: Sika Patent Attorneys

(57) **Abstract**

Method for producing a shaped article, the method comprising the steps of:
I) Providing a residual fluff fraction derived from polymeric membrane waste in a compactor,
II) Processing the residual fluff fraction in the compactor into agglomerates, and
III) Processing the agglomerates obtained from step II) or a combined feedstock comprising said agglomerates into a shaped article.

## Description

### Technical field

This disclosure relates to methods for utilization of waste material derived from construction industry, especially pre- or post-consumer polymeric membrane waste, for providing shaped articles. Particularly, the invention relates to a method for transforming a residual fluff fraction obtained from mechanical recycling of membrane waste into shaped articles used in construction related applications, such as roof walkway membranes.

### Background Art

According to an estimate of United States Environmental Protection Agency (EPA), 600 million tons of construction and demolition (C&D) waste were generated in the US in 2018, which is more than twice the amount of generated municipal solid waste. C&D waste materials are generated when new building and civil-engineering structures are built and when existing buildings and civil-engineering structures are renovated or demolished. These types of waste materials are commonly characterized as "post-consumer waste" since they have been generated after the product has been delivered to the end user.

Waste materials are also generated during manufacturing of products used in the field of construction. These waste materials are typically referred to as "post-industrial" or "pre-consumer" waste materials since they have been recovered during or as a result of manufacturing of the construction articles. Post-industrial waste materials include waste fractions generated during the production process but also off-spec products that have never been used for their intended purpose. Recycling of post-industrial and post-consumer polyvinylchloride (PVC) and thermoplastic elastomer (TPO) waste is well established practice in various segments of industry. For example, recycling of edge trimmings, off-spec membranes, and other scrap material generated during production of roofing membranes has been a standard practice for more than a decade.

A recycling process for membrane waste typically comprises reducing particle size of the membrane scrap material, for example by shredding or grinding, and removing the bulk of the fiber-based material, which may be present in the membrane as a reinforcing and/or backing layer. The comminuted membrane material could then be used to manufacture new products, such as roofing membranes, walkway pads, and other roof accessories. After processing into granules, the modern production lines are also capable of incorporating the membrane recyclate directly into their feedstock. Despite the technological advances in recycling of roofing membrane materials, recycling of post-consumer membrane waste has not yet been realized on a large scale.

One of the challenges in recycling of roofing membrane waste, particularly PVC membrane waste, is related to the processing of the fiber-based fraction, which is separated from the polymer matrix of the membrane as a "residual fluff" during the grinding step. The residual fluff is also commonly incinerated to produce energy from waste or sent to a landfill. However, due to the presence of PVC, the residual fluff is not a favored feedstock to produce energy from waste. Furthermore, disposing the residual fluff to a landfill is unacceptable as a long-term solution from environmental and sustainability point of view.

It would thus be desirable to recycle the residual fluff, but this has turned out to come with various challenges. One of the main challenges for the recycling is that the fluff is difficult to convey using mechanical conveyers since the fibers become entangled with the feeding equipment and can eventually cause jamming. Furthermore, the low bulk density, and "fluffy" nature of the material causes bridging and makes gravimetric feeding extremely difficult. Finally, the low density of the material also renders transportation to recycling centers inherently inefficient from fuel consumption point of view.

There is thus a need for a new method that would enable transforming the residual fluff fraction obtained as a by-product from mechanical recycling of membrane waste, particularly PVC membrane waste, into shaped articles, such as roof walkway membranes.

### Summary of the invention

The object of the present invention is to provide an improved method for recycling of membrane waste, particularly PVC membrane waste, to reduce the amount of construction waste sent to landfill.

Particularly, the object of the present invention is to provide an improved method for transformation of a residual fluff fraction obtained as a by-product from mechanical recycling of membrane waste, particularly PVC membrane waste, into shaped articles, which method overcomes or at least mitigates the disadvantages of the methods of prior art.

Surprisingly, it was discovered that the object can be achieved with the features described herein.

Specifically, according to embodiments of the invention, a method for producing a shaped article is proposed, the method comprising steps of:
I) Providing a residual fluff fraction derived from polymeric membrane waste in a compactor,
II) Processing the residual fluff fraction in the compactor into agglomerates, and III) Processing the agglomerates obtained from step II) or a combined feedstock comprising said agglomerates into a shaped article.

As it turned out, the residual fluff fraction can be processed in a compactor into agglomerates having a bulk density that is significantly higher than that of the residual. The agglomerates can then be processed, either as such or mixed with other types of materials, such as other types of waste feedstock, into shaped articles.

It was also surprisingly discovered that some shaped articles, such as roof walkway membranes, can be produced with the suggested method using the residual fluff fraction as the only feedstock material. Furthermore, such shaped articles were found to exhibit comparable application relevant properties compared to the articles prepared from virgin materials.

Additional aspects of the present invention are defined in further independent claims. Particularly preferred embodiments are outlined throughout the description and the dependent claims.

### Detailed description of the invention

In one aspect, this disclosure relates to a method for producing a shaped article comprising steps of:
I) Providing a residual fluff fraction derived from polymeric membrane waste in a compactor,
II) Processing the residual fluff fraction in the compactor into agglomerates, and III) Processing the agglomerates obtained from step II) or a combined feedstock comprising said agglomerates into a shaped article.

In one exemplary embodiment, step III) is conducted using molding, particularly injection molding, blow molding, rotational molding, or compression molding, thermoforming, extruding and/or calendering means.

Step III) may comprise melt-processing the agglomerates or the combined feedstock into a melt and shaping the melt into an article, for example having the dimensions of the shaped article.

The term "melt-processing" refers in the present disclosure to a process, in which at least one molten polymeric component is intimately mixed with at least one other component, which may be another molten polymeric component or a solid (non-meltable) component, such as an inorganic filler or an additive, until a melt, i.e. a substantially homogeneously mixed mixture of the polymeric component(s) and the other constituents is obtained.

The melt processing can be conducted as a batch process using any conventional mixer, such as a Brabender, Banbury, or a roll mixer or as continuous process using a continuous type of mixer, preferably an extruder, such as a single screw or a twin-screw extruder or a planetary roller extruder. The constituents of the feedstock, i.e., the agglomerates and other compounds, which may be present in the combined feedstock, can be fed into the mixer using a conventional feeding system comprising a feed hopper and feed extruder.

In one exemplary embodiment, the melt-processing and shaping of the melt are conducted using an extruder apparatus comprising an extruder and a die.

A suitable extruder may comprise a barrel and a screw unit contained in the barrel or a ram. Any conventional extruders, for example, a ram extruder, single screw extruder, or a twin-screw extruder may be used. Preferably, the extruder is a screw extruder, more preferably a twin- screw extruder. The screw unit of a conventional screw extruder is typically considered to comprise feed, transition, and metering sections. In the feed section, the feedstock enters the channels of the rotating screw and is conveyed towards the transition section, in which the composition is compressed and melted. The composition should be fully melted when it leaves the transition section. The function of the metering section is to homogenize the melted composition and to allow it to be metered or pumped out at constant rate. The extrusion apparatus further comprises a die, such as a flat die, consisting of manifold, approach, and lip regions.

In one exemplary embodiments, the extrusion temperature is in the range of 165 - 200 °C, preferably 170 - 190 °C. The term "extrusion temperature" refers to the temperature of the extruded composition in the die outlet.

In one exemplary embodiment, the extrusion pressure is in the range of 20 - 350 bar, preferably 30 - 240 bar. The term "extrusion pressure" refers to the pressure of the composition at the end of the metering zone just before the composition enters the die inlet.

Step II) of the method comprises processing of the residual fluff fraction in a compactor into agglomerates.

Particularly, the agglomerates obtained from the compactor have an increased bulk density compared to the bulk density of the residual fluff fraction. The term "bulk density" refers in the present disclosure to the mass of a particulate material in a unit volume (including voids between particles).

In one exemplary embodiment, the agglomerates obtained from step II) have a bulk density that is at least 25 %, preferably at least 45 %, more preferably at least 65 % higher than the bulk density of the residual fluff fraction, which is fed into the compactor.

The term "compactor" refers in the present disclosure to agglomerators/densifiers that are used for the processing and preparation of plastics including the agglomeration of polymer powders, fibers, and film and foam materials. These types of compactors are commercially available, for example from Herbold Meckesheim (Coperion) under the trade name of Plastcompactor.

Any type of conventional compactor can be used in step II) of the method. Such compactors typically contain compacting discs, particularly a rotating and a static compaction disc and the feed material is conveyed continuously from a feed silo through the center of the fixed disc into the processing area by means of a feed screw.

In some variations, step II) comprises processing the residual fluff between the compacting discs, especially between a rotating and a static compaction disc, to generate friction resulting fusing of the constituents of the residual fluff together.

In some further variations, the compactor includes a first granulator, where the constituents of the residual fluff fraction are sintered (fused together) due to the friction generated resulting from the material being processed against and between the compactor discs, and a second granulator, where the fused material, for example in form of a logs, is further processed into granules.

In some variations, the shaped article is selected from a roof walkway membrane, a back layer of a roof walkway membrane, a roofing membrane, a back layer of a roofing membrane, a roof detailing article, a roof cover board, a sound barrier board, or a protection board, a waterproofing membrane, and a waterbar.

Outer exterior surfaces of buildings have to be protected from environmental forces such as wind and rain. Roofing membranes composed of polymeric materials are typically used for waterproofing of flat or slightly sloped roofs whereas sloped roofs are typically covered with roof shingles.

Walkway membranes are used to protect roofing membranes, especially single-ply roofing membranes, from the impacts of foot traffic, which could damage the membrane. They are typically installed at roof access points, along designated foot traffic routes, and to areas where access is required, for example for plant maintenance or regular general roof maintenance. Walkway membranes typically feature an embossed surface finish that improves slip resistance in poor conditions.

Roof detailing articles are used, for example, for waterproofing of smaller areas than whole roofs, such as roof edges, parapet walls, expansion joints, and penetrations. Such detailing articling articles are typically provided in form of tapes or patches, which have a comparable thickness but significantly smaller width and/or length than the waterproofing and roofing membranes. Depending on the compatibility of the materials, the detailing articles can be fastened to roof substrates either by using heat welding or adhesive bonding means.

In addition to waterproofing, the outermost layer of a building should provide sufficient thermal insulation and fire resistance properties, both of which cannot be achieved using polymeric membranes alone. Consequently, roofing assemblies are provided as multi-component structures comprising at least a rigid insulation board, typically EPS, XPS, or polyisocyanurate (PIR), which is located under the roofing membrane.

The insulation boards based on polymeric foam materials have a low compression strength and fire resistance properties. Furthermore, regular low density PIR foams are especially susceptible to mechanical impacts caused from foot traffic and dropped tools. Therefore, cover boards (also known as hardboards) are commonly used to protect insulation boards from damage during and after installation of roofing systems. The roofing membrane can then be installed over the cover board. Roof cover boards or boards having similar properties than cover boards are also used in other construction related applications, for example, to provide a sound barrier in a wall or to protect other structures than roofs at the construction site from mechanical and environmental impacts. Cover Boards can also provide additional fire protection to the roof assembly and building.

Waterproofing membranes are applied, for example, to prevent ingress of water through cracks that develop in the concrete structure due to building settlement, load deflection or concrete shrinkage. Furthermore, large concrete structures, such as slabs, dams, tanks, and foundations, cannot be casted as one monolithic unit and, therefore, they contain several joints formed between the concrete bodies. These concrete joints also must be sealed to prevent passage of water into and through the joint. Waterproof profiles, also known as waterbars or waterstops, are commonly used for sealing of concrete joints. They are provided in a range of different compositions, shapes and sizes to suit different types of concrete structures and sealing applications.

In one exemplary embodiment, the residual fluff fraction is obtained as a by-product from mechanical recycling of pre-consumer and/or post-consumer membrane waste, particularly pre-consumer and/or post-consumer roofing membrane waste.

The terms "pre-consumer" and "post-consumer" are considered to have a meaning corresponding to the BS EN ISO 14021 :2016 standard. Especially, the term "pre-consumer waste" refers to any material diverted from the waste stream during manufacturing, such as cutting waste whereas the term "post-consumer waste" refers to waste material generated by households or businesses that can no longer be used for its intended purpose, such as plastic bottles that are no longer needed.

Consequently, the term "pre-consumer" or "post-industrial" membrane waste refers in the present disclosure to any material produced during a manufacturing process of membranes, which material was discarded before leaving the custody of the producer and thus never used by a customer. Examples of post-industrial membrane waste include, for example, edge trimmings, off-spec material, expired material, and other scrap material.

Furthermore, the term "post-consumer" membrane waste refers to material that was generated by the consumer. Examples of post-consumer membrane waste include, for example, old roofing membranes that were removed and replaced with new ones during roof renovation.

Mechanical recycling of membrane waste typically comprises decreasing the particle size of the waste material, for example, by grinding, shredding, and/or chopping, particularly to a range of 0.5 - 5 mm, particularly 1 - 4 mm, and collecting any residual fluff fraction as a by-product that may be separated from the membrane waste during the particle size reduction step. Mechanical recycling processes comprising reducing the particle size of the membrane waste material are known to the skilled person.

Generally, the residual fluff fraction may be derived from any type of recycled pre- or post-consumer membrane waste, particularly pre- or post-consumer roofing membrane waste.

The detailed composition of the residual fluff fraction depends on the origin of the recycled membrane waste.

Commonly used materials for the waterproofing and roofing membranes include plastics, particularly thermoplastics such as plasticized polyvinylchloride (p-PVC), thermoplastic polyolefins (TPE-O, TPO), and elastomers such as ethylene-propylene diene monomer (EPDM). Furthermore, roofing membranes used for providing mechanically adhered roof systems typically include one or more layers of fiber material, such as non-woven fabrics comprising synthetic organic and/or inorganic fibers, to improve the mechanical properties of the membrane. Layer of fiber material also used in adhered roof systems, where the roofing membrane is adhered to a surface of the roof substrate, such as a cover board using an adhesive layer.

In some variations, the recycled post-consumer membrane waste has been derived from mechanically fastened and/or ballasted and/or adhered roof systems, preferably from mechanically fastened and/or adhered roof systems.

Particularly, the residual fluff fraction may comprise fragments of fibers, especially synthetic organic and/or inorganic fibers, especially originating from the fiber-based layers of the recycled membranes, and at least one polymer component, preferably selected from plasticized polyvinylchloride resin, thermoplastic polyolefin, and ethylene-propylene diene monomer (EPDM).

The term "fragments of fibers" refers to particulate material obtained from mechanical processing, for example, grinding, milling, shredding, and/or chopping, of fiber-based material. The fragments of fibers can have multiple shapes, some of which are irregular.

The term "polyvinyl chloride (PVC) resin" refers in the present disclosure to both homopolymers of polyvinyl chloride and co- and terpolymers of vinyl chloride with comonomers such as vinyl acetate, vinyl formate, alkyl vinyl ethers, ethylene, propylene, butylenes, vinylidene chloride, alkyl acrylates and methacrylates, alkyl maleates, and alkyl fumarates. Preferably, at least 80 wt.-%, more preferably 100 wt.-%, of the monomers of the PVC resin are vinyl chloride monomers.

A plasticized PVC resin comprises, in addition to the PVC resin, one or more different types of plasticizers.

Examples of suitable plasticizers include but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

Examples of particularly suitable phthalate-free plasticizers include alkyl esters of benzoic acid, dialkyl esters of aliphatic dicarboxylic acids, polyesters of aliphatic dicarboxylic acids or of aliphatic di-, tri- and tetrols, the end groups of which are unesterified or have been esterified with monofunctional reagents, trialkyl esters of citric acid, acetylated trialkyl esters of citric acid, glycerol esters, benzoic diesters of mono-, di-, tri-, or polyalkylene glycols, trimethylolpropane esters, dialkyl esters of cyclohexanedicarboxylic acids, dialkyl esters of terephthalic acid, trialkyl esters of trimellitic acid, triaryl esters of phosphoric acid, diaryl alkyl esters of phosphoric acid, trialkyl esters of phosphoric acid, and aryl esters of alkanesulphonic acids. Further suitable plasticizers for the PVC resin include, for example, polymeric plasticizers, which are commercially available, for example, from Dow under the trade name of Elvaloy^{®}.

The term "thermoplastic polyolefin (TPO)" refers to a specific type of thermoplastic elastomers, which are based solely on olefinic components. These are also known as "thermoplastic olefins" or "olefinic thermoplastic elastomers" (TPE-O). Some TPOs are heterophasic polyolefin compositions containing a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs, and physical blends of the components. In case of a reactor-blend, the components are typically produced in a sequential polymerization process, wherein the components of the matrix phase are produced in a first reactor and transferred to a second reactor, where the components of the dispersed phase are produced and incorporated as domains in the matrix phase. A physical blend type TPO is produced by melt-mixing the base polyolefin with the polyolefin modifier each of which was separately formed prior to blending of the components.

The term "ethylene-propylene diene monomer (EPDM)" refers in the present disclosure to terpolymer of ethylene, propylene and a non-conjugated diene. Non-limiting examples of suitable non-conjugated dienes to be used in EPDM rubber include, for example, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,4-cyclohexadiene; tetrahydroindene; methyltetrahydroindene; dicyclopentadiene; 5-isopropylidene-2-norbornene; and 5-vinyl-norbornene.

In some variations, the fibers include at least one of polyester fibers, polypropylene fibers, nylon fibers, polyamide fibers, glass fibers, aramid fibers, wollastonite fibers, and carbon fibers, particularly at least one of polyester fibers, polypropylene fibers, and glass fibers.

In some cases, the residual fluff fraction comprises:
a) 5 - 65 wt.-%, especially 10 - 50 wt.-%, particularly 15 - 40 wt.-% fragments of synthetic organic and/or inorganic fibers and
b) 40 - 90 wt.-% especially 45 - 85 wt.-%, particularly 55 - 80 wt.-% of the of at least one polymer component, preferably selected from polyvinylchloride resin, plasticized polyvinylchloride resin, thermoplastic polyolefin (TPO), and ethylene-propylene diene monomer (EPDM), especially polyvinylchloride resin or plasticized polyvinylchloride resin, particularly plasticized polyvinylchloride resin.

The combined feedstock can contain, in addition to the agglomerates obtained from step II), other materials, especially other polymeric materials.

In some variations, the combined feedstock comprises at least 15 wt.-%, particularly at least 35 wt.-%, especially at least 50 wt.-% of the agglomerates obtained from step II).

In some further variations, the combined feedstock comprises at least 65 wt.-%, particularly at least 85 wt.-%, especially at least 95 wt.-% of the agglomerates obtained from step II).

Suitable other materials for use in the combined feedstock include, for example, plastic materials, particularly virgin and recycled plastic materials, especially containing at least one of polyvinylchloride resin, polyolefins, such as polyethylene and polypropylene, thermoplastic polyolefin (TPO), and rubber, especially ethylene-propylene diene monomer (EPDM).

The term "polyethylene" refers in the present disclosure to ethylene homopolymers and ethylene copolymers.

Examples of suitable polyethylenes include, but are not restricted to, low-density polyethylene (LDPE) or linear low-density polyethylene (LLDPE), or high-density polyethylene (HDPE), preferably linear low-density polyethylene (LLDPE).

Suitable polypropylenes include, for example, polypropylene homopolymers (hPP), such as isotactic polypropylene (iPP) and syndiotactic polypropylene (sPP), and propylene copolymers.

The polyethylene contained in the combined feedstock may originate from a recycled waste material stream, for example, post-industrial or post-consumer plastic waste, for example, recycled plastic bags.

In one exemplary embodiment, the combined feedstock comprises, in addition to the residual fluff fraction, a polyvinylchloride dry blend, especially a plasticized polyvinylchloride dry blend.

The term "dry blend" refers to a homogeneous, dry powder with greater or lesser flowability. Polyvinylchloride dry blends typically comprise a polyvinylchloride resin, fillers, lubricants, and stabilizers and they can be produced, for example, by heating the constituents of a polyvinylchloride formulation in a high-speed mixer to temperatures of about 100 to 120 °C. A plasticized polyvinylchloride dry blend further contains one or more types of plasticizers. Suitable plasticizer have already been discussed above.

The plasticizer PVC dry blend may comprise:
- 25 - 65 wt.-%, such as 30 - 60 wt.-% of the polyvinylchloride resin,
- 15 - 50 wt.-%, such as 20 - 40 wt.-% of the at least one plasticizer, and
- 0 - 30 wt.-%, such as 0 - 20 wt.-% of the at least one inorganic filler, all proportions being based on the total weight of the plasticized PVC dry blend.

The plasticized PVC dry blend may further comprise one or more additives such as UV- and heat stabilizers, antioxidants, flame retardants, dyes, pigments such as titanium dioxide, matting agents, antistatic agents, impact modifiers, biocides, and processing aids such as lubricants, slip agents, antiblock agents, and denest aids. It may however be preferred that the total amount of these types of additives in the plasticized PVC dry blend is not more than 15 wt.-%, particularly not more than 10 wt.-%, especially not more than 5 wt.-%.

In some variations, the combined feedstock contains:
A) 15 - 90 wt.-%, particularly 25 - 80 wt.-%, especially 35 - 70 wt.-% of the residual fluff fraction,
B) 2.5 - 75 wt.-%, particularly 5 - 65 wt.-%, especially 10 - 55 wt.-% of a virgin or recycled plastic material different from residual fluff fraction, especially a polyvinylchloride dry blend or a plasticized polyvinylchloride dry blend.

Another aspect of the present invention is a shaped article obtained by using the method of the present invention.

## Claims

1. A method for producing a shaped article, the method comprising steps of:
I) Providing a residual fluff fraction derived from polymeric membrane waste in a compactor,
II) Processing the residual fluff fraction in the compactor into agglomerates, and
III) Processing the agglomerates obtained from step II) or a combined feedstock comprising said agglomerates into a shaped article.

2. The method according to claim 1, wherein step III) is conducted using molding, thermoforming, extruding and/or calendering means.

3. The method according to claim 1 or 2, wherein step III) comprises melt-processing the agglomerates or the combined feedstock into a melt and shaping the melt into an article, preferably having the dimensions of the shaped article.

4. The method according to claim 3, wherein the melt-processing and shaping of the melt are conducted using an extruder apparatus comprising an extruder and a die.

5. The method according to any one of previous claims, wherein the compactor includes compaction discs and wherein step II) comprises processing the residual fluff between the discs to generate friction resulting fusing of the constituents of the residual fluff together.

6. The method according to any one of previous claims, wherein the compactor includes a first granulator, where the constituents of the residual fluff fraction are sintered due to the friction generated resulting from the material being processed against and between the compactor discs, and a second granulator, where the fused material is further processed into granules.

7. The method according to any one of previous claims, wherein the shaped article is selected from a roof walkway membrane, a back layer of a roof walkway membrane, a roofing membrane, a back layer of a roofing membrane, a roof detailing article, a waterproofing membrane, a waterbar, a roof cover board, a sound barrier board, or a protection board.

8. The method according to any one of previous claims, wherein the residual fluff fraction is obtained as a by-product from mechanical recycling of pre-consumer and/or post-consumer polymeric membrane waste.

9. The method according to claim 8, wherein the post-consumer polymeric membrane waste is derived from mechanically fastened and/or ballasted and/or adhered roof systems.

10. The method according to any one of previous claims, wherein the residual fluff fraction comprises fragments of synthetic organic and/or inorganic fibers and at least one polymer component selected from polyvinylchloride resin, plasticized polyvinylchloride resin, thermoplastic polyolefin (TPO), and ethylene-propylene diene monomer (EPDM).

11. The method according to claim 10, wherein the fibers are selected from polyester, polypropylene, nylon, polyamide, glass, aramid, wollastonite, and carbon fibers.

12. The method according to claim 10 or 11, wherein the residual fluff fraction comprises:
a) 5 - 65 wt.-%, especially 10 - 50 wt.-%, particularly 15 - 40 wt.-% of the fragments of synthetic organic and/or inorganic fibers and
b) 40 - 90 wt.-% especially 45 - 85 wt.-%, particularly 55 - 80 wt.-% of the of at least one polymer component.

13. The method according to any one of previous claims, wherein the combined feedstock comprises at least 15 wt.-%, particularly at least 35 wt.-%, especially at least 50 wt.-% of the agglomerates obtained from step II).

14. The method according to any one of previous claims, wherein the combined feedstock further comprises a polyvinylchloride dry blend or a plasticized polyvinylchloride dry blend.

15. A shaped article obtained by using the method according to any one of previous claims.
